(19) Europäisches Patentamt
European Patent Office
Office européen des brevets

(11) **EP 4 148 284 B1**

(12) **EUROPÄISCHE PATENTSCHRIFT**

(45) Veröffentlichungstag und Bekanntmachung des Hinweises auf die Patenterteilung:
**29.10.2025  Patentblatt 2025/44**

(21) Anmeldenummer: **22193762.6**

(22) Anmeldetag: **02.09.2022**

(51) Internationale Patentklassifikation (IPC):
**F04D 29/32** *(2006.01)*

(52) Gemeinsame Patentklassifikation (CPC):
**F04D 29/324;** F05D 2240/301; F05D 2240/303;
F05D 2250/70; Y02T 50/60

(54) **SCHAUFELBLATT FÜR EINEN VERDICHTER EINER STRÖMUNGSMASCHINE**

BLADE FOR A COMPRESSOR OF A TURBOMACHINE

PALE D'AUBE POUR UN COMPRESSEUR D'UNE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.09.2021  DE 102021123281**

(43) Veröffentlichungstag der Anmeldung:
**15.03.2023  Patentblatt 2023/11**

(73) Patentinhaber: **MTU Aero Engines AG**
**80995 München (DE)**

(72) Erfinder:
• **Hanschke, Benjamin**
  **80995 München (DE)**
• **Junge, Michael**
  **80995 München (DE)**
• **Kraus, Astrid**
  **80995 München (DE)**
• **Storti, Francesca**
  **80995 München (DE)**

(56) Entgegenhaltungen:
EP-A1- 1 338 799     EP-A1- 2 927 427
EP-A1- 3 431 707     US-A- 5 480 285

**Beschreibung**

Die Erfindung betrifft ein Schaufelblatt für einen Verdichter einer Strömungsmaschine, welches sich ausgehend von einem Schaufelfuß zwischen einer Vorderkante und einer Hinterkante zu einer Schaufelspitze erstreckt, wobei die Vorderkante eine Vorderkantendicke und das Schaufelblatt eine maximale Profildicke aufweisen, deren Verhältnis zueinander eine relative Vorderkantendicke darstellt, und das Schaufelblatt einen Vorderkantenkeilwinkel aufweist.

Dokument EP 1 338 799 A1 zeigt ein typisches

Schaufelblatt für einen Verdichter einer Strömungsmaschine.

In einer Strömungsmaschine wird Luft angesaugt, in einem Verdichter komprimiert, in einer Brennkammer mit Brennstoff vermischt und zur Erzeugung heißer Verbrennungsgase gezündet, um eine Turbine anzutreiben. Die Energieübertragung erfolgt typischerweise mittels Schaufelblättern, die derart profiliert sind, dass durch die Umströmung eine Druckdifferenz zwischen Vorder- und Rückseite entsteht. Bei der Entwicklung solcher Schaufelblätter stehen verschiedene Anforderungen im Vordergrund: Es müssen strukturmechanische Festigkeitsanforderungen eingehalten werden, beispielsweise eine Robustheit gegenüber einer Beschädigung durch Fremdkörper oder eine Beständigkeit in Bezug auf Wechselbelastungszyklen, die ein Material aufnehmen kann, bevor es aufgrund von Ermüdung versagt. Zudem soll ein möglichst hoher Wirkungsgrad und Pumpgrenzabstand erzielt werden.

Diese teils konträren Anforderungen der beteiligten Disziplinen an die Zielgeometrie von Schaufelblättern für Verdichter stehen einander limitierend gegenüber. Beispielsweise sind, basierend auf aerodynamischen Überlegungen, schlanke Schaufelblattvorderkanten bevorzugt, da diese zur Wirkungsgradsteigerung beitragen. Derartige Geometrien weisen aber im Hinblick auf strukturmechanische Anforderungen, insbesondere bezüglich einer Beschädigung durch Fremdkörper (Foreign Object Damage (FOD)), empfindliche Bereiche auf. Demnach besteht eine der Hauptschwierigkeiten bei der Entwicklung von Schaufelblättern für Verdichter darin, unter Berücksichtigung der vielfältigen Anforderungen, balancierte Vorgaben für die Auslegung einer Profilkontur solcher Schaufelblätter bereitzustellen.

Hiervon ausgehend ist es eine Aufgabe der vorliegenden Erfindung, ein verbessertes Schaufelblatt vorzuschlagen, welches eine hohe Laufleistung und Lebensdauer erzielt.

Dies wird erfindungsgemäß durch die Lehre des Anspruchs 1 erreicht. Vorteilhafte Ausführungen der Erfindung sind Gegenstand der Unteransprüche.

Zur Lösung der Aufgabe wird ein Schaufelblatt für einen Verdichter einer Strömungsmaschine vorgeschlagen, welches sich ausgehend von einem Schaufelfuß zwischen einer Vorderkante und einer Hinterkante zu einer Schaufelspitze erstreckt, wobei die Vorderkante eine Vorderkantendicke und das Schaufelblatt eine maximale Profildicke aufweisen, deren Verhältnis zueinander eine relative Vorderkantendicke darstellt. Das Schaufelblatt weist einen Vorderkantenkeilwinkel (Wedge angle) auf. Ein Produkt aus der relativen Vorderkantendicke und dem Vorderkantenkeilwinkel bildet dabei in wenigstens einem Querschnitt des Schaufelblatts einen Vorderkantenverhältnisparameter, dessen Wert größer als 5,5 ist.

Das Schaufelblatt weist üblicherweise eine im Wesentlichen konkave Druckseite und eine gegenüberliegende im Wesentlichen konvexe Saugseite auf und ist zur radialen Anordnung in einem Verdichter ausgebildet. Das Schaufelblatt erstreckt sich, in Bezug auf eine Anordnung des Schaufelblatts in einem Verdichter einer Strömungsmaschine, axial zwischen einer anströmungsseitigen Vorderkante und einer Hinterkante sowie radial von einem Schaufelfuß zu einer Schaufelspitze. Ein Profil des Schaufelblatts ist durch die Form des Querschnitts des Schaufelblatts in Strömungsrichtung definiert. Da die Vorderkante des Schaufelblatts im Betrieb anströmungsseitig orientiert ist, ist hier eine Anfälligkeit für Beschädigungen durch einströmende Fremdkörper besonders hoch.

Eine relative Vorderkantendicke ($vkd_{rel}$) ist ein das Schaufelblatt charakterisierender Parameter und ist gebildet aus dem Verhältnis einer Vorderkantendicke ($d_{LE}$) zu einer maximalen Profildicke ($d_{max}$):

$$\text{Relative Vorderkantendicke } (vkd_{rel}) = \frac{d_{LE}}{d_{max}}$$

Die maximale Profildicke ist hierbei der größtmögliche Kreisdurchmesser auf einer Profilmittellinie des Schaufelblatts. Die Vorderkantendicke ist ein Kreisdurchmesser auf der Profilmittellinie des Schaufelblatts in einem Bereich der Vorderkante. Die Profilmittellinie ist hierbei die Kurve, die an jeder Stelle zur Saugseite und Druckseite des Profils des Schaufelblatts den gleichen (Quer-)Abstand hat.

Ein Vorderkantenkeilwinkel (($\alpha_w$); Wedge Angle) ist ein Winkel zwischen einer Tangente an der Saugseite und einer Tangente an der Druckseite des Schaufelblatts. Dabei liegen die Tangenten an den Punkten der Saugseite und der Druckseite an, an denen der Kreisdurchmesser oder Ellipsendurchmesser der Vorderkantendicke in das Schaufelblattprofil an Saugseite und Druckseite übergeht. Im Rahmen der Erfindung ist der Vorderkantenkeilwinkel in Winkelgrad angegeben, wobei ein Winkelgrad ein Winkelmaß ist und dem 360-sten Teil eines Kreises entspricht. In anderen Worten ist 1 Winkelgrad definiert als der 360. Teil des Vollwinkels, d. h. 1 Vollwinkel = 360°.

Der Vorderkantenverhältnisparameter ($\vartheta$) wird somit wie folgt gebildet:

$$\text{Vorderkantenverhältnisparameter } (\vartheta) = vkd_{rel} * \alpha_w$$

Die Erfindung basiert entsprechend insbesondere auf der Idee, eine Kenngröße für ein Schaufelblatt bzw. das Querschnittsprofil bzw. -geometrie eines Schaufelblatts anzugeben, die eine verbesserte Konturierung einer Schaufelblattvorderkante erlaubt, um eine mechanische Belastbarkeit in Verbindung mit einer aerodynamischen Effizienz des Schaufelblatts zu verbessern. So ergibt sich bei einem Schaufelblatt, dessen Vorderkantenverhältnisparameter größer als 5,5 ist, eine kerbunempfindlichere Geometrie des Schaufelblatts, als bei bisher bekannten Geometrien, bei welchen der Wert dieses Vorderkantenverhältnisparameters kleiner als 5,5 ist. Insbesondere sind bei der erfindungsgemäßen Korrelation der relativen Vorderkantendicke und dem Vorderkantenkeilwinkel sowohl die Anforderungen an die strukturelle Integrität des Schaufelblatts als auch aerodynamischen Kriterien, wie beispielsweise ein hoher Wirkungsgrad und eine Einhaltung des Pumpgrenzabstands, erfüllt.

Bei einer Ausführungsform des Schaufelblatts liegt der wenigstens eine Querschnitt des Schaufelblatts in einem Bereich, in welchem die relative Schaufelblatthöhe wenigstens 20% der Gesamtschaufelblatthöhe ist. Die Schaufelblatthöhe erstreckt sich ausgehend vom Schaufelfuß, welcher beispielsweise bei einer Blisk dem Anbindungsbereich des Schaufelblatts an dem Nabenkörper entspricht, bis zu der Schaufelspitze. Entsprechend ist in einem vom Schaufelfuß wenigstens 1/5 der gesamten Schaufelblatthöhe beabstandeten Bereich eine Ausbildung des Schaufelblatts mit dem Vorderkantenverhältnisparameter größer als 5,5 vorteilhaft, da so eine gleichzeitig stabile und kerbunempfindliche Konfiguration des Schaufelblatts ermöglicht wird.

Bei einer Ausführungsform des Schaufelblatts ist der Wert des Vorderkantenverhältnisparameters $\vartheta$ in dem wenigstens einen Querschnitt des Schaufelblatts größer als 6, insbesondere größer als 6,5 und weiter insbesondere größer als 7. Insbesondere ist der Wert des Vorderkantenverhältnisparameters in wenigstens einem Querschnitt größer als 5,5; 5,6; 5,7; 5,8; 5,9; 6,0; 6,1; 6,2; 6,3; 6,4; 6,5; 6,6; 6,7; 6,8; 6,9; 7,0; 7,1; 7,2; 7,3; 7,4; 7,5; 7,6; 7,7; 7,8; 7,9; 8,0; 8,1; 8,2; 8,3; 8,4; 8,5; 8,6; 8,7; 8,8; 8,9; 9,0; 9,1; 9,2; 9,3; 9,4; 9,5; 9,6; 9,7: 9,8; 9,9; 10,0 oder mehr. Ein derart ausgebildeter Vorderkantenverhältnisparameter ermöglicht eine Gestaltung eines Schaufelblatts mit sowohl einer hohen Robustheit gegenüber Beschädigungen von Fremdkörpern als auch mit einem hohen aerodynamischen Wirkungsgrad.

Bei einer Ausführungsform des Schaufelblatts liegt der wenigstens eine Querschnitt des Schaufelblatts in einem Bereich, in welchem die relative Schaufelblatthöhe wenigstens 25%, insbesondere wenigstens 30% und weiter insbesondere wenigstens 40%, insbesondere wenigstens 50% und insbesondere wenigstens 60% der Gesamtschaufelblatthöhe ist. Dabei liegt der wenigstens eine Querschnitt der Vorderkante bei einer Ausführungsform in einem Bereich, in welchem die relative Schaufelblatthöhe höchstens 90%, insbesondere höchstens 85% und weiter insbesondere höchstens 80% ist.

Bei einer Ausführungsform des Schaufelblatts, bei welcher der Vorderkantenverhältnisparameter in wenigstens einem Querschnitt einen entsprechend der vorgeschlagenen Schaufelblatthöhe beabstandet zum Schaufelfuß und/ oder beabstandet zur Schaufelspitze einen vorgeschlagenen Wert aufweist, kann das Schaufelblatt in wenigstens einem anderen Querschnitt entlang der Schaufelblatthöhe weitere oder andere spezifische aerodynamische und strukturmechanische Eigenschaften aufweisen. Entsprechend wird zumindest abschnittsweise entlang der Schaufelblatthöhe eine hohe Resistenz gegen FOD-Beschädigungen ermöglicht.

Bei einer Ausführungsform des Schaufelblatts weist die Vorderkantendicke einen Wert von 0,2 mm bis 5 mm auf. Insbesondere beträgt die Vorderkantendicke 0,3 mm, 0,4 mm, 0,5 mm, 0,6 mm, 0,7 mm, 0,8 mm, 0,9 mm, 1,0 mm, 1,1 mm, 1,2 mm, 1,3 mm, 1,4 mm, 1,5 mm, 1,6 mm, 1,7 mm, 1,8 mm, 1,9 mm, 2,0 mm, 2,1 mm, 2,2 mm, 2,3 mm, 2,4 mm, 2,5 mm, 2,6 mm, 2,7 mm, 2,8 mm, 2,9 mm, 3,0 mm, 3,1 mm, 3,2 mm, 3,3 mm, 3,4 mm, 3,5 mm, 3,6 mm, 3,7 mm, 3,8 mm, 3,9 mm, 4,0 mm, 4,1 mm, 4,2 mm, 4,3 mm, 4,4 mm, 4,5 mm, 4,6 mm, 4,7 mm, 4,8 mm, 4,9 mm, 5,0 mm, wobei jeder angegebene Wert den Bereich zu den nächsten angegebenen Werten einschließt.

Die Auslegung des Schaufelblatts entsprechend dem vorgeschlagenen Vorderkantenverhältnisparameter ermöglicht auch für unterschiedliche Vorderkantendicken des Schaufelblatts eine hinsichtlich der Kerbunempfindlichkeit verbesserte Gestaltung eines Schaufelblatts für einen Verdichter.

Bei einer Ausführungsform des Schaufelblatts weist der Vorderkantenkeilwinkel einen Wert von 2° bis 45°, gemessen in Winkelgrad, auf. Insbesondere beträgt der Vorderkantenwinkel 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44° oder 45°, wobei jeder angegebene Winkel den Bereich zu den nächsten angegebenen Wert, also in etwa einen Bereich von einem (Winkel-)Grad einschließt.

Bei einem derart ausgebildeten Vorderkantenkeilwinkel ist bei einem wie vorgeschlagen ausgebildeten Schaufelblatt eine strukturelle Integrität des Schaufelblatts, insbesondere in Bezug auf eine maximal zulässige Eindringtiefe eines definierten Partikels, möglich.

Die Erfindung betrifft ferner auch eine Schaufelblattanordnung für einen Verdichter einer Strömungsmaschine, welche wenigstens ein erfindungsgemäßes Schaufelblatt aufweist. Eine Schaufelblattanordnung umfasst dabei eine Verdichterscheibe und eine Mehrzahl daran radial angeordnete Schaufelblätter. Insbesondere sind hierbei die Schaufelblätter formschlüssig mit der Verdichterscheibe verbunden oder die Schaufelblattanordnung weist mehrere einstückig mit der Verdichterscheibe ausgebildete Schaufelblätter auf (Blisk). Eine derartige Ausgestaltung der Schaufelblattanordnung führt zu einer höheren mechanischen Belastbarkeit sowie zu einer besseren aerodynamischen Effizienz der Schaufelblattanordnung.

Bei einer Ausführungsform weist ein Verdichter wenigstens ein hierin beschriebenes Schaufelblatt und/oder eine hierin beschriebene Schaufelblattanordnung auf. Der Verdichter kann hierbei als Niederdruckverdichter oder Hochdruckverdichter ausgebildet sein.

Bei einer Ausführungsform weist eine Strömungsmaschine mit einem Verdichter wenigstens ein hierin beschriebenes Schaufelblatt und/oder eine hierin beschriebene Schaufelblattanordnung auf. In einer Ausführungsform sind die Schaufelblätter mehrerer, vorzugsweise aller Verdichterstufen entsprechend der vorgeschlagenen Weise ausgestaltet.

Eine Verwendung eines hierin beschriebenen Schaufelblatts in einer Schaufelblattanordnung und/oder einem Verdichter und/oder einer Strömungsmaschine ist ebenfalls Gegenstand der vorliegenden Erfindung.

Weitere Merkmale, Vorteile und Anwendungsmöglichkeiten der Erfindung ergeben sich aus der nachfolgenden Beschreibung im Zusammenhang mit den Figuren. Es zeigt

Fig. 1      eine schematische Darstellung eines beispielhaften erfindungsgemäßen Schaufelblatts für einen Verdichter einer Strömungsmaschine;

Fig. 2      eine schematische Darstellung eines Profils im Querschnitt eines beispielhaften erfindungsgemäßen Schaufelblatts für einen Verdichter einer Strömungsmaschine;

Fig. 3      eine schematische Darstellung eines Querschnitts einer Vorderkante eines beispielhaften erfindungsgemäßen Schaufelblatts; und

Fig. 4      ein Diagramm in welchem Vorderkantenverhältnisparameter $\vartheta$ von Schaufelblättern aus dem Stand der Technik sowie ein Bereich V dargestellt sind.

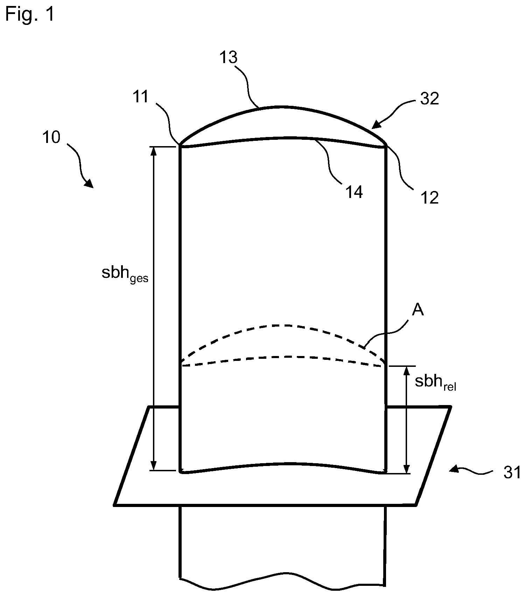

**Fig. 1** zeigt eine schematische Darstellung eines beispielhaften Schaufelblatts 10 für einen Verdichter einer Strömungsmaschine. Das Schaufelblatt 10 erstreckt sich ausgehend von einem Schaufelfuß 31 zwischen einer Vorderkante 11 und einer Hinterkante 12 zu einer Schaufelspitze 32. Zwischen der Vorderkante 11 und der Hinterkante 12 erstrecken sich eine Saugseite 13 und eine gegenüberliegende Druckseite 14 des Schaufelblatts 10.

Eine relative Schaufelblatthöhe $sbh_{rel}$ wird ausgehend von dem Schaufelfuß 31 angegeben. Der in Fig. 1 dargestellte Querschnitt A des Schaufelblatts 10 liegt in einem Bereich, in welchem die relative Schaufelblatthöhe $sbh_{rel}$ größer als 20% der gesamten Schaufelblatthöhe $sbh_{ges}$ ist. In einem Querschnitt A des Schaufelblatts 10 (in Strömungsrichtung) ist der Vorderkantenverhältnisparameter $\vartheta$ bei einer vorgeschlagenen Gestaltung größer als 5,5.

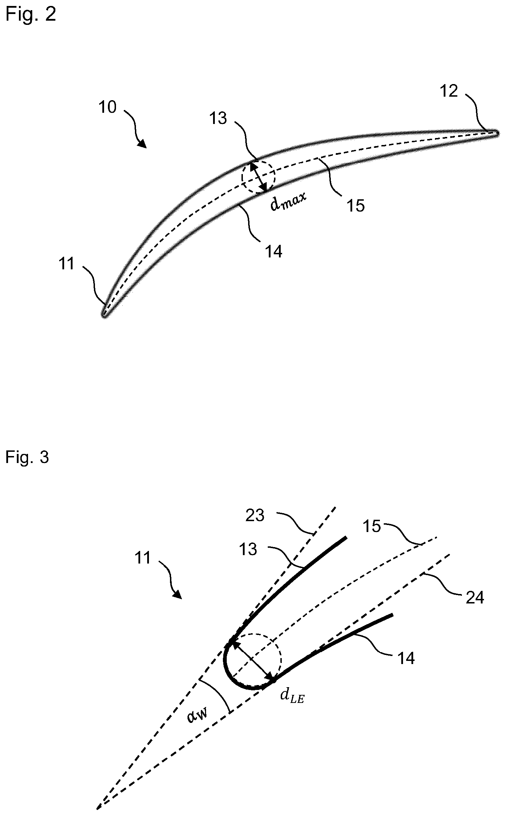

**Fig. 2** zeigt ein schematisches Profil des Schaufelblatts 10 in Strömungsrichtung im Querschnitt A aus Fig. 1. In einer Richtung senkrecht zur Zeichnungsebene reicht das Schaufelblatt 10 von einem hier nicht dargestellten Schaufelfuß 31 zu einer Schaufelspitze 32. Das Schaufelblatt 10 erstreckt sich zwischen einer anströmungsseitigen Vorderkante 11 und einer Hinterkante 12. Das Schaufelblatt 10 weist im Wesentlichen eine konvexe Saugseite 13 und eine gegenüberliegende im Wesentlichen konkave Druckseite 14 auf. Eine Profilmittellinie 15 weist an jeder Stelle zur Saugseite 13 und zur Druckseite 14 des Profils des Schaufelblatts 10 den gleichen Abstand auf, wobei die maximale Profildicke $d_{max}$ den größtmöglichen einbeschriebenen Kreisdurchmesser auf der Profilmittellinie 15 des Schaufelblatts 10 darstellt.

**Fig. 3** zeigt eine schematische Darstellung der Vorderkante 11 im Querschnitt A des Ausführungsbeispiels des Schaufelblatts 10 aus Fig. 2. Zur Verdeutlichung der Erfindung ist eine Vorderkantendicke $d_{LE}$ dargestellt, welche einem Kreisdurchmesser (was passiert bei elliptischer Ausführung der Vorderkante? Bleibt der Patentanspruch bestehen?) auf der Profilmittellinie 15 des Schaufelblatts 10 an der Vorderkante 11 entspricht. An einem Punkt der Saugseite 13, an welcher der Kreisdurchmesser der Vorderkantendicke $d_{LE}$ in das Schaufelblatt 10 übergeht, ist eine saugseitige Tangente 23 dargestellt. An einem Punkt der Druckseite 14, an der der Kreisdurchmesser der Vorderkantendicke $d_{LE}$ in das Schaufelblatt 10 übergeht, ist eine druckseitige Tangente 24 dargestellt. Die beiden Tangenten 23 und 24 bilden in ihrem Schnittpunkt einen Vorderkantenkeilwinkel $\alpha_w$ (Wedge Angle).

Aus der Vorderkantendicke $d_{LE}$, welche ins Verhältnis zu der in Fig. 2 dargestellten maximalen Profildicke $d_{max}$ gesetzt wird, wird eine relative Vorderkantendicke $vkd_{rel}$ des Schaufelblatts 10 gebildet. Ein Produkt aus der so gebildeten relativen Vorderkantendicke $vkd_{rel}$ und dem Vorderkantenkeilwinkel $\alpha_w$ ergibt einen Vorderkantenverhältnisparameter $\vartheta$, welcher eine Geometrie der Vorderkante 11 des Schaufelblatts 10 charakterisiert. Bei der vorgeschlagenen Gestaltung ist der Wert dieses Vorderkantenverhältnisparameters $\vartheta$ für ein Schaufelblatt 10 größer als 5,5.

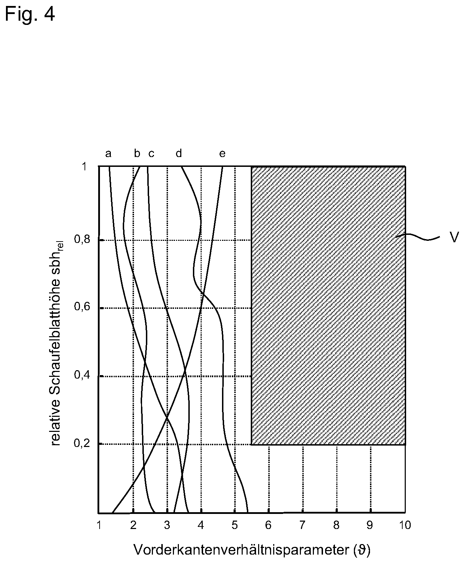

**Fig. 4** zeigt eine Darstellung eines Diagramms, welches Kurven a-e einer Korrelation zwischen einer relativen Schaufelblatthöhe $sbh_{rel}$ und einem Vorderkantenverhältnisparameter $\vartheta$ für verschiedene vermessene, nicht erfindungsgemäß ausgebildete Schaufelblätter 10 aus dem Stand der Technik darstellt. Die relative Schaufelblatthöhe $sbh_{rel}$ ist hierbei ausgehend von einem Schaufelfuß 31 angegeben.

Im Diagramm ist ein vorteilhafter Bereich V dargestellt, in welchem der Vorderkantenverhältnisparameter $\vartheta$ größer als 5,5 ist. Eine relative Schaufelblatthöhe $sbh_{rel}$ von insbesondere wenigstens 20% vom Schaufelfuß 31 hat sich als vorteilhaft bei der Gestaltung von Schaufelblättern erwiesen, um eine Laufleistung und Lebensdauer für ein Schaufelblatt 10, insbesondere in Bezug auf Fremdkörperbeschädigungen zu verbessern.

**BEZUGSZEICHENLISTE**

| | |
|---|---|
| 10 | Schaufelblatt |
| 11 | Vorderkante |
| 12 | Hinterkante |
| 13 | Saugseite |
| 14 | Druckseite |
| 15 | Profilmittelline |
| 23 | Tangente der Saugseite |
| 24 | Tangente der Druckseite |
| 31 | Schaufelfuß |
| 32 | Schaufelspitze |
| $d_{max}$ | maximale Profildicke |
| $d_{LE}$ | Vorderkantenprofildicke |
| $sbh_{ges}$ | gesamte Schaufelblatthöhe |
| $sbh_{rel}$ | relative Schaufelblatthöhe |
| $vkd_{rel}$ | relative Vorderkantendicke |
| $\alpha_w$ | Vorderkantenkeilwinkel |
| $\vartheta$ | Vorderkantenverhältnisparameter |
| A | Querschnitt |
| V | vorteilhafter Bereich |

**Patentansprüche**

1. Schaufelblatt (10) für einen Verdichter einer Strömungsmaschine, welches sich ausgehend von einem Schaufelfuß (31) zwischen einer Vorderkante (11) und einer Hinterkante (12) zu einer Schaufelspitze (32) erstreckt, wobei die Vorderkante (11) eine Vorderkantendicke ($d_{LE}$) und das Schaufelblatt (11) eine maximale Profildicke ($d_{max}$) aufweisen, deren Verhältnis zueinander eine relative Vorderkantendicke ($vkd_{rel}$) darstellt, und das Schaufelblatt (11) einen Vorderkantenkeilwinkel ($\alpha_w$) aufweist, **dadurch gekennzeichnet, dass** ein Produkt aus der relativen Vorderkantendicke ($vkd_{rel}$) und dem Vorderkantenkeilwinkel ($\alpha_w$) in wenigstens einem Querschnitt (A) des Schaufelblatts (10) einen Vorderkantenverhältnisparameter ($\vartheta$) bildet, dessen Wert größer als 5,5 ist.

2. Schaufelblatt (10) nach Anspruch 1, **dadurch gekennzeichnet, dass** der wenigstens eine Querschnitt (A) des Schaufelblatts (10) in einem Bereich liegt, in welchem die relative Schaufelblatthöhe ($sbh_{rel}$) wenigstens 20% der Gesamtschaufelblatthöhe ($sbh_{ges}$) beträgt.

3. Schaufelblatt (10) nach einem der vorhergehenden Ansprüche, **dadurch gekennzeichnet, dass** der Wert des Vorderkantenverhältnisparameters ($\vartheta$) in wenigstens einem Querschnitt (A) des Schaufelblatts (10) größer als 6, insbesondere größer als 6,5 und weiter insbesondere größer als 7 ist.

4. Schaufelblatt (10) nach einem der vorhergehenden Ansprüche, **dadurch gekennzeichnet, dass** der wenigstens eine Querschnitt der Vorderkante (11) in einem Bereich liegt, in welchem die relative Schaufelblatthöhe ($sbh_{rel}$) wenigstens 25%, insbesondere wenigstens 30% und weiter insbesondere wenigstens 40% der Gesamtschaufelblatthöhe ($sbh_{ges}$) beträgt.

5. Schaufelblatt (10) nach einem der vorhergehenden Ansprüche, **dadurch gekennzeichnet, dass** die Vorderkantendicke ($d_{LE}$) einen Wert von 0,2 mm bis 5 mm aufweist.

6. Schaufelblatt (10) nach einem der vorhergehenden Ansprüche, **dadurch gekennzeichnet, dass** der Vorderkan-

tenkeilwinkel ($\alpha_w$) einen Wert von 2° bis 45° beträgt.

7. Schaufelblattanordnung für einen Verdichter, aufweisend wenigstens ein Schaufelblatt (10) nach wenigstens einem der Ansprüche 1 bis 6.

8. Verdichter für eine Strömungsmaschine, aufweisend wenigstens ein Schaufelblatt (10) nach wenigstens einem der Ansprüche 1 bis 6 und/ oder eine Schaufelblattanordnung nach Anspruch 7.

9. Strömungsmaschine mit einem Verdichter, wobei der Verdichter wenigstens ein Schaufelblatt (10) nach wenigstens einem der Ansprüche 1 bis 6 und/ oder eine Schaufelblattanordnung nach Anspruch 7 und/ oder wobei der Verdichter nach Anspruch 8 ausgebildet ist.

**Claims**

1. Airfoil (10) for a compressor of a turbomachine, which extends from a blade root (31), between a leading edge (11) and a trailing edge (12), to a blade tip (32), wherein the leading edge (11) has a leading-edge thickness (dLE) and the airfoil (11) has a maximum profile thickness ($d_{max}$), the ratio of said thicknesses to one another representing a relative leading-edge thickness ($vkd_{re}i$), and the airfoil (11) has a leading-edge wedge angle ($a_w$), **characterized in that** a product of the relative leading-edge thickness ($vkd_{re}i$) and the leading-edge wedge angle ($a_w$) in at least one cross section (A) of the airfoil (10) forms a leading-edge ratio parameter (3), the value of which is greater than 5.5.

2. Airfoil (10) according to claim 1, **characterized in that** the at least one cross section (A) of the airfoil (10) lies in a region in which the relative airfoil height ($sbh_{re}i$) is at least 20% of the total airfoil height ($sbh_{ges}$).

3. Airfoil (10) according to either of the preceding claims,
**characterized in that** the value of the leading-edge ratio parameter (3) in at least one cross section (A) of the airfoil (10) is greater than 6, in particular greater than 6.5 and more particularly greater than 7.

4. Airfoil (10) according to any of the preceding claims,
**characterized in that** the at least one cross section of the leading edge (11) lies in a region in which the relative airfoil height ($sbh_{re}i$) is at least 25%, in particular at least 30% and more particularly at least 40% of the total airfoil height ($sbh_{ges}$).

5. Airfoil (10) according to any of the preceding claims, **characterized in that** the leading-edge thickness (dLE) has a value of 0.2 mm to 5 mm.

6. Airfoil (10) according to any of the preceding claims, **characterized in that** the leading-edge wedge angle ($a_w$) has a value of 2° to 45°.

7. Airfoil arrangement for a compressor, comprising at least one airfoil (10) according to at least one of claims 1 to 6.

8. Compressor for a turbomachine, comprising at least one airfoil (10) io according to at least one of claims 1 to 6 and/or an airfoil arrangement according to claim 7.

9. Turbomachine having a compressor, wherein the compressor at least one airfoil (10) according to at least one of claims 1 to 6 and/or an
airfoil arrangement according to claim 7, and/or wherein the compressor is designed according to claim 8.

**Revendications**

1. Pale d'aube (10) pour un compresseur d'une turbomachine, laquelle pale d'aube s'étend à partir d'un pied d'aube (31) entre un bord d'attaque (11) et un bord de fuite (12) jusqu'à une pointe d'aube (32), dans laquelle le bord d'attaque (11) présente une épaisseur de bord d'attaque (dLE) et la pale d'aube (11) présente une épaisseur de profil maximale ($d_{max}$), dont le rapport mutuel représente une épaisseur relative de bord d'attaque ($vkd_{re}i$), et la pale d'aube (11) présente un angle de tranchant de bord d'attaque ($a_w$),
**caractérisée en ce qu'un** produit de l'épaisseur relative de bord d'attaque ($vkd_{re}i$) et de l'angle de tranchant de bord d'attaque ($a_w$) dans au moins une section transversale (A) de la pale d'aube (10) forme un paramètre de rapport de bord d'attaque (3) dont la valeur est supérieure à 5,5.

2. Pale d'aube (10) selon la revendication 1, **caractérisée en ce que** l'au moins une section transversale (A) de la pale d'aube (10) est située dans une zone dans laquelle la hauteur relative de pale d'aube ($sbh_{re}i$) est d'au moins 20 % de la hauteur totale de pale d'aube ($sbh_{ges}$).

3. Pale d'aube (10) selon l'une des revendications précédentes,
**caractérisée en ce que** la valeur du paramètre de rapport de bord d'attaque (3) dans au moins une section transversale (A) de la pale d'aube (10) est supérieure à 6, en particulier supérieure à 6,5 et plus particulièrement supérieure à 7.

4. Pale d'aube (10) selon l'une des revendications précédentes,
**caractérisée en ce que** l'au moins une section transversale du bord d'attaque (11) est située dans une zone dans laquelle la hauteur relative de pale d'aube ($sbh_{re}i$) est d'au moins 25 %, en particulier d'au moins 30 %, et plus particulièrement d'au moins 40 % de la hauteur totale de pale d'aube ($sbh_{ges}$).

5. Pale d'aube (10) selon l'une des revendications précédentes,
**caractérisée en ce que** l'épaisseur de bord d'attaque ($d_L E$) présente une valeur allant de 0,2 mm à 5 mm.

6. Pale d'aube (10) selon l'une des revendications précédentes,
**caractérisée en ce que** l'angle de tranchant de bord d'attaque ($a_w$) est une valeur allant de 2° à 45°.

7. Agencement de pales d'aube pour un compresseur, présentant au moins une pale d'aube (10) selon au moins l'une des revendications 1 à 6.

8. Compresseur pour une turbomachine, présentant au moins une pale d'aube (10) io selon au moins l'une des revendications 1 à 6 et/ou un agencement de pales d'aube selon la revendication 7.

9. Turbomachine comportant un compresseur, dans laquelle le compresseur au moins une pale d'aube (10) selon au moins l'une des revendications 1 à 6 et/ou un agencement de pales d'aube selon la revendication 7 et/ou dans laquelle le compresseur est réalisé selon la revendication 8.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1338799 A1